# EUROPEAN PATENT SPECIFICATION

(11) **EP 4 151 479 B1**
(45) Date of publication and mention of the grant of the patent: **30.07.2025**
(21) Application number: 22188458.8
(22) Date of filing: 03.08.2022
(51) Int. Cl.: B60W 10/08, B60W 10/188, B60W 10/192, B60W 30/18

(54) **VEHICLE CONTROLLER AND VEHICLE CONTROL METHOD**
FAHRZEUGSTEUERGERÄT UND FAHRZEUGSTEUERVERFAHREN
CONTRÔLEUR DE VÉHICULE ET PROCÉDÉ DE COMMANDE DE VÉHICULE

(30) Priority: 17.09.2021 JP 2021151870
(43) Date of publication of application: 22.03.2023
(73) Proprietor: ADVICS CO., LTD., Kariya-shi, Aichi 448-8688 (JP); TOYOTA JIDOSHA KABUSHIKI KAISHA, Toyota-shi Aichi 471-8571 (JP)
(72) Inventor: FUKUKAWA, Shogi, Chuo-ku, 103-0022 (JP); ASANO, Masayuki, Chuo-ku, 103-0022 (JP); MIYAKE, Kazuki, Toyota-shi, 471-8571 (JP); SAKAI, Akitsugu, Toyota-shi, 471-8571 (JP)
(74) Representative: TBK

(56) References cited:
- EP-A1- 3 121 074
- EP-A2- 1 306 263
- US-A1- 2016 039 292

## Description

### BACKGROUND

### 1. Field

The present invention relates to a vehicle controller and a vehicle control method.

### 2. Description of Related Art

Document JP 2019 - 98 972 A discloses a vehicle equipped with a driving device, a braking device, and an autonomous driving controller that controls the driving device and the braking device so as to execute an autonomous driving control. The autonomous driving controller executes a feedback control of the driving device and the braking device in order to eliminate a deviation between a target acceleration and an actual acceleration.

During an execution of the above-described autonomous driving control, a state in which the driving device is operating, may be switched to a state in which the braking device operates. In such a case, the actual acceleration of the vehicle may fluctuate due to a difference in responsiveness between the driving device and the braking device. This may cause an occupant of the vehicle to experience discomfort.

The patent application US 2016/039292 discloses a brake control device for vehicles capable of generating both regenerative and friction braking forces, wherein the device aims to address the issue of fluctuating vehicle deceleration during the transition from regenerative to friction braking modes.

### SUMMARY

It is the object of the invention, to provide a vehicle controller and a control method of a vehicle controller suitably meeting the above issues.

The object is achieved by a vehicle controller according to claim 1 and by a control method according to claim 5. Advantageous embodiments are carried out according to the dependent claims.

According to the invention, a vehicle controller controls a driving device, which includes a motor-generator, and a braking device, which applies a frictional braking force to a vehicle, thereby automatically controlling a traveling speed of the vehicle. The vehicle controller includes a controlling unit. The controlling unit calculates a feedback control amount based on a deviation between a target acceleration of the vehicle and an actual acceleration of the vehicle. The controlling unit also executes a feedback control of the driving device and the braking device by using the feedback control amount, such that the deviation decreases. A state in which only the driving device, of the driving device and the braking device, operates is a first state. A state in which at least the braking device, of the driving device and the braking device, operates is a second state. When switched from the first state to the second state, the controlling unit calculates the feedback control amount such that the deviation permitted in the feedback control is greater than the deviation prior to a start of switching from the first state to the second state.

According to the invention, a vehicle control method controls a driving device, which includes a motor-generator, and a braking device, which applies a frictional braking force to a vehicle, thereby automatically controlling a traveling speed of the vehicle. The method includes: calculating a feedback control amount based on a deviation between a target acceleration of the vehicle and an actual acceleration of the vehicle; and executing a feedback control of the driving device and the braking device by using the feedback control amount, such that the deviation decreases. A state in which only the driving device, of the driving device and the braking device, operates is a first state. A state in which at least the braking device, of the driving device and the braking device, operates is a second state. The calculating the feedback control amount includes calculating, when switched from the first state to the second state, the feedback control amount such that the deviation permitted in the feedback control is greater than the deviation prior to a start of switching from the first state to the second state.

Other features and aspects will be apparent from the following detailed description, the drawings, and the claims.

### BRIEF DESCRIPTION OF THE DRAWINGS

Fig. 1 is a schematic diagram showing a configuration of a vehicle equipped with a travel controller.
Fig. 2 is a block diagram of the travel controller.
Fig. 3 is a timing diagram showing changes in various parameters during an execution of a replacement control.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

In this application, "at least one of A and B" should be understood to mean "only A, only B, or both A and B."

A vehicle controller according to one embodiment will now be described with reference to the drawings. The vehicle controller is a travel controller 100 in the present embodiment. In the present embodiment, the travel controller 100 is mounted on a vehicle 10, which is a battery electric vehicle.

### <Vehicle 10>

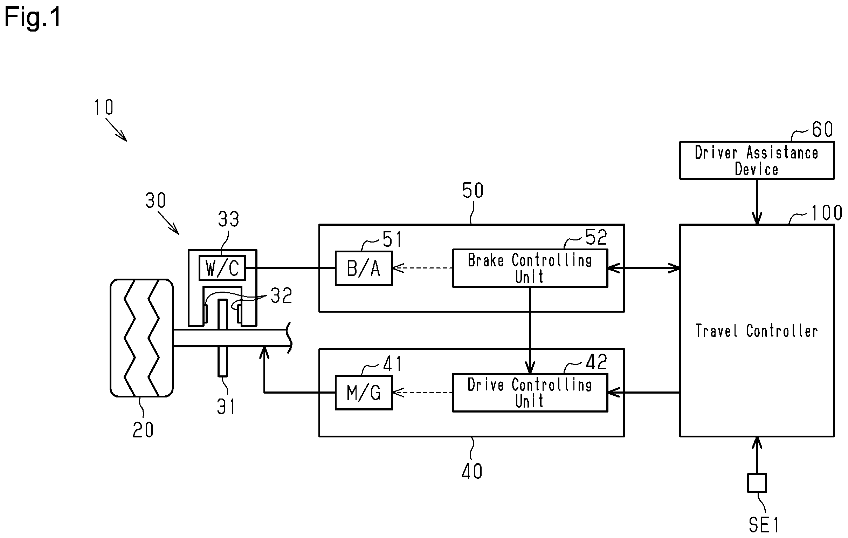

As shown in Fig. 1, the vehicle 10 includes wheels 20, braking mechanisms 30, a driving device 40, a braking device 50, a driver assistance device 60, the travel controller 100, and a wheel speed sensor SE1. Some of the components of the vehicle 10 are omitted from Fig. 1.

### <Braking Mechanism 30>

Each braking mechanism 30 includes a rotor 31, which rotates integrally with the associated wheel 20, frictional members 32, which do not rotate integrally with the wheel 20, a wheel cylinder 33, which displaces the frictional members 32 toward the rotor 31 in accordance with a hydraulic pressure.

As the hydraulic pressure of the wheel cylinder 33 increases, the braking mechanism 30 presses the frictional members 32 to the rotor 31 with a greater force. As the force with which the frictional members 32 are pressed against the rotor 31 increases, the braking mechanism 30 applies a greater frictional braking force Fbf to the wheel 20. The braking mechanism 30 are provided for the respective wheels 20. For example, if the vehicle 10 is a four-wheel vehicle, the vehicle 10 is equipped with four wheels 20 and four braking mechanisms 30.

### <Driving Device 40>

The driving device 40 includes a motor-generator 41 and a drive controlling unit 42, which controls the motor-generator 41.

When the motor-generator 41 functions as an electric motor, the motor-generator 41 applies, to each wheel 20, a driving force Fd for causing the vehicle 10 to travel. That is, the motor-generator 41 functions as a drive source of the vehicle 10. When the motor-generator 41 functions as a generator, the motor-generator 41 generates power in accordance with the rotation speed of the wheels 20. During generation of power, the motor-generator 41 applies, to the wheels 20, a regenerative braking force Fbr, which decelerates the vehicle 10.

The drive controlling unit 42 causes the motor-generator 41 to generate the driving force Fd based on a request driving force Fdq requested by the travel controller 100. Also, the drive controlling unit 42 causes the motor-generator 41 to generate the regenerative braking force Fbr based on a request regenerative braking force Fbrq requested by the brake controlling unit 52. For example, if the vehicle 10 is a four-wheel vehicle, the vehicle 10 preferably include a motor-generator for the front wheels and a motor-generator for the rear wheels.

### <Braking Device 50>

The braking device 50 includes a brake actuator 51, which adjusts a hydraulic pressure of the wheel cylinder 33, and a brake controlling unit 52, which controls the brake actuator 51.

The brake actuator 51 adjusts the amount of brake fluid supplied to the wheel cylinder 33 so as to adjust the hydraulic pressure of the wheel cylinder 33. The brake actuator 51 is preferably capable of adjusting the hydraulic pressure of each of wheel cylinders 33 that respectively correspond to the wheels 20. Due to the need for adjustment of the hydraulic pressure, the braking device 50 has a lower responsiveness than that of the driving device 40. It is now assumed, by way of example, step functions of the same magnitude are input to the driving device 40 and the braking device 50 as command values. In this case, the driving device 40 has a short response delay until it produces the regenerative braking force Fbr, which corresponds to the magnitude of the step function. In contrast, the braking device 50 tends to have a longer response delay until it produces the frictional braking force Fbf, which corresponds to the magnitude of the step function.

The brake controlling unit 52 divides a request braking force Fbq into the regenerative braking force Fbr and the frictional braking force Fbf. Specifically, based on the request braking force Fbq, which is requested by the travel controller 100, the brake controlling unit 52 calculates a request regenerative braking force Fbrq to be produced by the motor-generator 41, and a request frictional braking force Fbfq to be produced by the brake actuator 51. The brake controlling unit 52 causes the brake actuator 51 to generate the frictional braking force Fbf based on the request frictional braking force Fbfq, while it sends a request for the request regenerative braking force Fbrq to the drive controlling unit 42.

When the motor-generator 41 is capable of producing the regenerative braking force Fbr, the brake controlling unit 52 increases a ratio α of the request regenerative braking force Fbrq to the request braking force Fbq in order to increase the recovery efficiency of regenerative energy. On the other hand, when the vehicle 10 is about to stop with brake being applied to the vehicle 10, the brake controlling unit 52 executes a replacement control that replaces the regenerative braking force Fbr with the frictional braking force Fbf. In the replacement control, the brake controlling unit 52 gradually reduces the magnitude of the request regenerative braking force Fbrq and gradually increases the magnitude of the request frictional braking force Fbfq.

The ratio α prior to the execution of the replacement control is less than or equal to 100% and greater than 0%. The ratio α gradually decreases during the replacement control. The ratio α after the replacement control is less than the ratio α prior to the replacement control. For example, the execution of the replacement control changes the ratio α from 100% to 0%. The replacement control is preferably started, for example, when a vehicle speed Vb falls below a specific speed Vbth and finished before the vehicle speed Vb becomes 0. In another embodiment, the ratio α may be reduced in a stepwise manner.

The brake controlling unit 52 delivers, to the travel controller 100, a frictional braking intervention flag FLG, which indicates whether the frictional braking force Fbf is being applied to the vehicle 10. The frictional braking intervention flag FLG is set to ON during a period in which the frictional braking force Fbf is applied to the vehicle 10, and is set to OFF during a period in which the frictional braking force Fbf is not applied to the vehicle 10.

When the replacement control is executed, a state of the driving device 40 and the braking device 50 is switched from a first state to a second state. The first state is a state in which only the driving device 40, of the driving device 40 and the braking device 50, is activated. The second state is a state in which at least the braking device 50, of the driving device 40 and the braking device 50, is activated. The first state is a state prior to the start of the replacement control. Specifically, the first state is a state in which the braking device 50 is not applying the frictional braking force Fbf to the vehicle 10, while the driving device 40 is applying the regenerative braking force Fbr to the vehicle 10. The second state includes a state in which the replacement control is being executed. Specifically, the second state includes a state in which the magnitude of the force produced by the driving device 40 is less than that in the first state and the magnitude of the force produced by the braking device 50 is greater than that in the first state. In other words, the second state includes a state in which the magnitude of the regenerative braking force Fbr, which is produced by the driving device 40, is less than that prior to the start of the replacement control, and the magnitude of the frictional braking force Fbf, which is produced by the braking device 50, is greater than that prior to the start of the replacement control. In the present embodiment, the first state corresponds to a state in which the frictional braking intervention flag FLG is OFF, and the second state corresponds to a state in which the frictional braking intervention flag FLG is ON.

### <Driver Assistance Device 60>

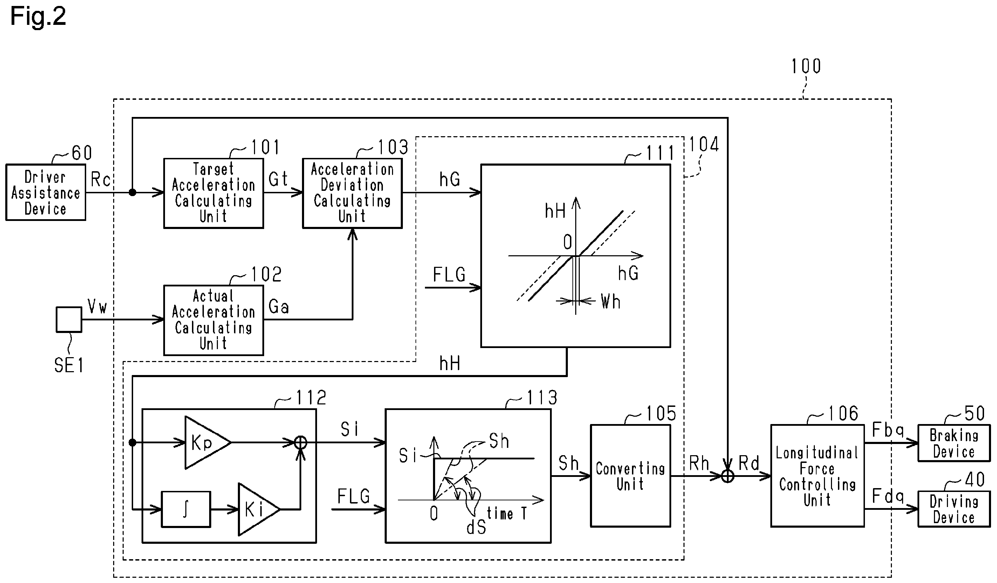

The driver assistance device 60 executes an autonomous driving control to cause the vehicle 10 to travel autonomously. As shown in Figs. 1 and 2, the driver assistance device 60 calculates a request value Rc used in the autonomous driving control based on various types of driving information. In the present embodiment, the request value Rc is a request value of a longitudinal force that indicates a force that acts in the longitudinal direction of the vehicle 10. When having a positive value, the request value Rc indicates that the driver assistance device 60 is requesting acceleration of the vehicle 10. When having a negative value, the request value Rc indicates that the driver assistance device 60 is requesting deceleration of the vehicle 10. Also, the driving information includes, for example, information related to the position of the vehicle 10, information related to the environment of the vehicle 10, and information related to the traveling state of the vehicle 10.

### <Travel Controller 100>

As shown in Fig. 2, the travel controller 100 includes a target acceleration calculating unit 101, an actual acceleration calculating unit 102, an acceleration deviation calculating unit 103, a feedback controlling unit 104, a converting unit 105, and a longitudinal force controlling unit 106. The feedback controlling unit 104 corresponds to one example of a control unit, and includes a dead band setting unit 111, a PI controlling unit 112, and a change amount limiting unit 113. The travel controller 100 controls the driving device 40 and the braking device 50 based on the request value Rc of the driver assistance device 60, thereby automatically control the traveling speed of the vehicle 10.

The target acceleration calculating unit 101 calculates a target acceleration G of the vehicle 10 based on the request value Rc of the driver assistance device 60. Specifically, the target acceleration calculating unit 101 converts the request value Rc, which is a longitudinal force, into the dimension of acceleration, so as to calculate the target acceleration Gt. The target acceleration Gt has a positive value when acceleration of the vehicle 10 is requested. The target acceleration Gt has a negative value when deceleration of the vehicle 10 is requested.

The actual acceleration calculating unit 102 calculates a wheel speed Vw and the vehicle speed Vb based on a detection result of the wheel speed sensor SE1. The actual acceleration calculating unit 102 then performs temporal differentiation of the vehicle speed Vb, thereby calculating the actual acceleration of the vehicle 10. In the following description, the actual acceleration of the vehicle 10 is labeled as Ga.

The acceleration deviation calculating unit 103 subtracts the actual acceleration Ga, which is calculated by the actual acceleration calculating unit 102, from the target acceleration Gt, which is calculated by the target acceleration calculating unit 101, thereby calculating a deviation hG between the accelerations.

The dead band setting unit 111 of the feedback controlling unit 104 sets a dead band in a range that includes the value 0 of the acceleration deviation hG, which is calculated by the acceleration deviation calculating unit 103. In the following description, the deviation after the dead band is set will be referred to as a deviation hH to be distinguished from the deviation hG before the dead band is set.

The dead band setting unit 111 sets the deviation hH to 0 when the deviation hG is within the dead band. The dead band setting unit 111 sets the deviation hH to a positive value when the deviation hG is greater than the upper limit of the dead band. Specifically, the dead band setting unit 111 increases the deviation hH as the deviation hG increases when the deviation hG is greater than the upper limit of the dead band. In contrast, the dead band setting unit 111 sets the deviation hH to a negative value when the deviation hG is less than the lower limit of the dead band. Specifically, the dead band setting unit 111 reduces the deviation hH as the deviation hG decreases when the deviation hG is less than the lower limit of the dead band.

The dead band setting unit 111 sets a width Wh of the dead band to a first width Wh1 when the frictional braking intervention flag FLG is OFF. Also, the dead band setting unit 111 sets the width Wh of the dead band to a second width Wh2, which is wider than the first width Wh1, when the frictional braking intervention flag FLG is ON. The first width Wh1 corresponds to the responsiveness of the driving device 40 and is narrower than a width that corresponds to the responsiveness of the braking device 50. On the other hand, the second width Wh2 corresponds to the responsiveness of the braking device 50. In this manner, when switched from the first state, in which only the driving device 40 operates, to the second state, in which at least the braking device 50 operates, the dead band setting unit 111 causes the width Wh of the dead band to be wider than the width prior to the start of the switching.

In Fig. 2, a solid line represents the relationship between the deviation hH and the deviation hG in a case in which the frictional braking intervention flag FLG is OFF. A broken line represents the relationship between the deviation hH and the deviation hG in a case in which the frictional braking intervention flag FLG is ON.

The PI controlling unit 112 of the feedback controlling unit 104 calculates a feedback control amount Si, which is used to reduce the deviation hH. That is, the feedback control amount Si is calculated through a feedback control that uses the deviation hH as an input. In the present embodiment, the feedback control includes a proportional control and an integral control. The feedback control amount Si is thus obtained by adding the product of the proportional gain Kp and the deviation hH to the product of an integral gain Ki and the time integral of the deviation hH.

The change amount limiting unit 113 of the feedback controlling unit 104 sets a limit to a temporal change amount dS, which is a change amount per unit time of the feedback control amount Si, which is calculated by the PI controlling unit 112. That is, the change amount limiting unit 113 is a rate limiter that uses the feedback control amount Si as an input, and outputs a feedback control amount Sh. When the feedback control amount Si changes in a stepwise manner as indicated by a solid line in Fig. 2, the temporal change amount dS of the feedback control amount Sh is reduced as indicated by a long-dash short-dash line and a long-dash double-short-dash line.

When the frictional braking intervention flag FLG is OFF, the change amount limiting unit 113 sets the upper limit of the temporal change amount dS of the feedback control amount Si to a first upper limit dS1. The long-dash short-dash line in the change amount limiting unit 113 shown in Fig. 2 represents the first upper limit dS1. When the frictional braking intervention flag FLG is ON, the change amount limiting unit 113 sets the upper limit of the temporal change amount dS of the feedback control amount Si to a second upper limit dS2, which has a smaller gradient than the first upper limit dS1. The long-dash double-short-dash line in the change amount limiting unit 113 shown in Fig. 2 represents the second upper limit dS2. In this manner, the change amount limiting unit 113 sets the temporal change amount dS of the feedback control amount Sh to a smaller value when the frictional braking intervention flag FLG is ON than when the frictional braking intervention flag FLG is OFF. In other words, when switched from the first state, in which only the driving device 40 operates, to the second state, in which at least the braking device 50 operates, the change amount limiting unit 113 causes the temporal change amount dS of the feedback control amount Sh to be smaller than the temporal change amount dS prior to the start of the switching.

The first upper limit dS1 and the second upper limit dS2 are set to positive values when the temporal change amount dS of the feedback control amount Si has a positive value, and are set to negative values when the temporal change amount dS of the feedback control amount Si has a negative value. In this respect, the change amount limiting unit 113 limits the temporal change amount dS of the feedback control amount Si by reducing the gradient of change in the feedback control amount Si in relation to the time elapsed.

The converting unit 105 converts the feedback control amount Sh, of which the change amount is limited by the change amount limiting unit 113, into the same dimension as the request value Rc. In the present embodiment, the converting unit 105 converts the feedback control amount Sh, which is in the dimension of acceleration, into a feedback control amount in the dimension of longitudinal force. In the following description, the feedback control amount after the conversion will be referred to as a compensation value Rh.

The longitudinal force controlling unit 106 controls the driving device 40 and the braking device 50 based on the sum of the request value Rc and the compensation value Rh. In the following description, the sum of the request value Rc and the compensation value Rh will be referred to as a corrected request value Rd. When the corrected request value Rd has a positive value, the longitudinal force controlling unit 106 requests the driving device 40 to generate the request driving force Fdq that corresponds to the magnitude the corrected request value Rd. In this case, the driving force Fd that corresponds to the request driving force Fdq is applied to the vehicle 10. In contrast, when the corrected request value Rd has a negative value, the longitudinal force controlling unit 106 requests the braking device 50 to generate the request braking force Fbq that corresponds to the magnitude of the corrected request value Rd. In this case, the braking force Fb is applied to the vehicle 10 such that the sum of the regenerative braking force Fbr and the frictional braking force Fbf is equal to the request braking force Fbq.

### <Operation and Advantages of Present Embodiment>

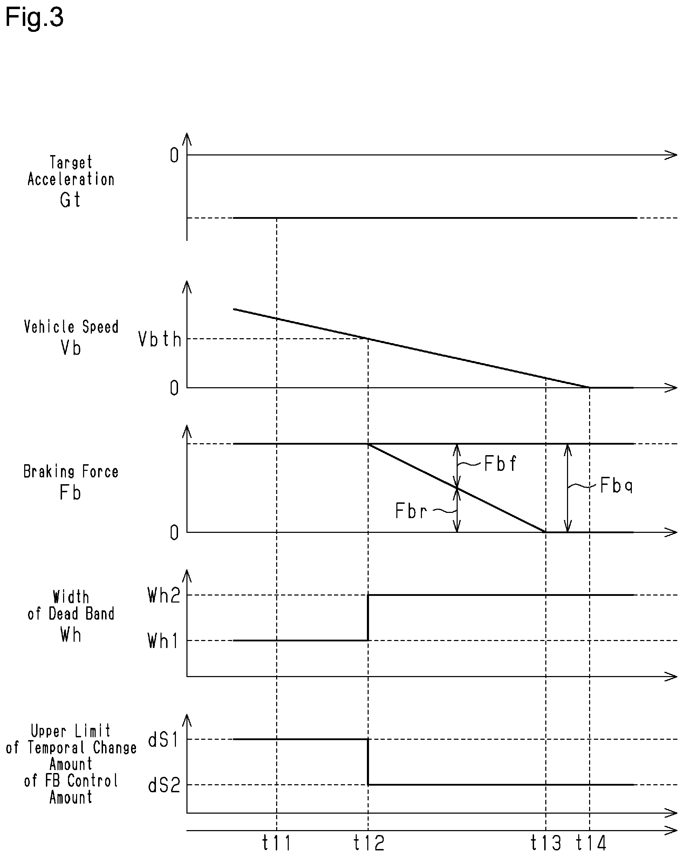

With reference to Fig. 3, changes in various parameters during the execution of the replacement control will be described.

As shown in Fig. 3, the braking force Fb is applied to the vehicle 10 when the target acceleration Gt has a negative value. Since the target acceleration Gt is constant, that is, since the request braking force Fbq is constant, the vehicle speed Vb gradually decreases.

At a first point in time t11, at which the vehicle speed Vb is greater than the determination speed Vbth, the braking force Fb applied to the vehicle 10 includes only the regenerative braking force Fbr, so that the frictional braking intervention flag FLG is OFF. Thus, at the first point in time t11, the width Wh of the dead band is the first width Wh1, and the upper limit of the temporal change amount dS of the feedback control amount Si is the first upper limit dS1.

When the vehicle speed Vb becomes equal to the determination speed Vbth at a second point in time t12 due to the decrease in the vehicle speed Vb, the replacement control is started. That is, the frictional braking intervention flag FLG is set to ON at the second point in time t12. The replacement control gradually reduces the magnitude of the regenerative braking force Fbr and gradually increases the magnitude of the frictional braking force Fbf. In other words, the ratio α of the regenerative braking force Fbr gradually decreases. Since the replacement control is started at the second point in time t12, the second point in time t12 corresponds to a point in time at which the state of the driving device 40 and the braking device 50 is switched from the first state, in which only the driving device 40 operates, to the second state, in which at least the braking device 50 operates.

As described above, the braking device 50 has a lower responsiveness than that of the driving device 40. Accordingly, during the execution of the replacement control, the request regenerative braking force Fbrq and the regenerative braking force Fbr, which is produced by the driving device 40, are unlikely to deviate from each other. In contrast, during the execution of the replacement control, the request frictional braking force Fbfq and the frictional braking force Fbf, which is produced by the braking device 50, are likely to deviate from each other. Thus, the actual acceleration Ga of the vehicle 10 may fluctuate periodically if a feedback control is executed to compensate for the deviation hG, which is produced by the responsiveness of the braking device 50 during the execution of the replacement control.

In this regard, the present embodiment sets the width Wh of the dead band to the second width Wh2, which is wider than the first width Wh1, when the frictional braking intervention flag FLG is set to ON at the second point in time t12. As a result, the deviation hH is likely to become 0 when the deviation hG has a value near 0. Thus, when the feedback control amount Si is calculated using the deviation hH, the proportional term is likely to become 0, and the absolute value of the feedback control amount Si is unlikely to increase. Since the frictional braking force Fbf and the regenerative braking force Fbr are adjusted based on the feedback control amount Si, the actual acceleration Ga of the vehicle 10 is prevented from fluctuating periodically during the execution of the replacement control.

Also, during the execution of the replacement control, the feedback control amount Si may be changed abruptly in order to eliminate the deviation hG. In such a case, a jerk, which is the temporal change amount of the actual acceleration Ga, may become excessive, impairing the ride comfort of the vehicle 10. Further, during the execution of the replacement control, if the responsiveness of the brake actuator 51 to a sudden change in the feedback control amount Si is low, the request frictional braking force Fbfq and the frictional braking force Fbf may deviate from each other.

In this regard, when the frictional braking intervention flag FLG is set to ON, the present embodiment sets the upper limit of the temporal change amount dS of the feedback control amount Si to the second upper limit dS2, which is lower than the first upper limit dS1. This prevents the jerk from being excessive, and the ride comfort of the vehicle 10 is unlikely to be impaired. Also, since the change amount of the feedback control amount Sh, which is used to set the request braking force Fbq, is unlikely to increase, the request frictional braking force Fbfq and the frictional braking force Fbf are prevented from deviating from each other even if the responsiveness of the brake actuator 51 is low.

At a third point in time t13, at which the vehicle speed Vb is greater than 0, the braking force Fb applied to the vehicle 10 includes only the frictional braking force Fbf. That is, the replacement control is completed at the third point in time t13 before the vehicle 10 stops. However, since the frictional braking intervention flag FLG is still ON, the width Wh of the dead band is maintained at the second width Wh2 after the third point in time t13, so that the upper limit of the temporal change amount dS of the feedback control amount Si is maintained at the second upper limit dS2. Thereafter, the vehicle 10 stops at a fourth point in time t14, at which the vehicle speed Vb becomes 0.

In the case illustrated by Fig. 3, the braking device 50 applies the frictional braking force Fbf to the vehicle 10 not only during the execution of the replacement control from the second point in time t12 to the third point in time t13, but also in a period after the third point in time t13, that is, in a period after the completion of the replacement control. The state after the second point in time t12 thus corresponds to the second state.

As described above, when the replacement control is started, the feedback control amount Sh is calculated such that the deviation hG, which is permitted in the feedback control, is greater than that prior to the start of the replacement control. That is, when switched from the first state, in which only the driving device 40 operates, to the second state, in which at least the braking device 50 operates, the feedback control amount Sh is calculated such that the deviation hG, which is permitted in the feedback control, becomes greater than that prior to the start of the switching. This prevents fluctuation of the actual acceleration Ga and thus prevents the occupant of the vehicle 10 from experiencing discomfort. Accordingly, the ride comfort of the vehicle 10 is improved.

### <Modifications>

The above-described embodiment may be modified as follows. The above-described embodiment and the following modifications can be combined as long as the combined modifications remain technically consistent with each other.

If a state in which the target acceleration Gt is 0 continues in the travel controller 100, a state in which the driving device 40 applies the driving force Fd to the vehicle 10 and a state in which the braking device 50 applies the braking force Fb to the vehicle 10 may be switched back and forth at short intervals. In other words, the first state, in which only the driving device 40 operates, and the second state, in which at least the braking device 50 operates, are repeated at short intervals. The first state refers to a state in which the driving device 40 applies the driving force Fd to the vehicle 10. The second state refers to a state in which the magnitude of the driving force Fd applied to the vehicle 10 by the driving device 40 is less than that in the first state, and the magnitude of the frictional braking force Fbf applied to the vehicle 10 by the braking device 50 is greater than that in the first state.

When switched from the first state to the second state, the travel controller 100 may calculate the feedback control amount Sh such that the deviation hG, which is permitted in the feedback control, is greater than that prior to the start of the switching. Specifically, when switched from the first state to the second state, the travel controller 100 may cause the width Wh of the dead band to be wider than the width Wh prior to the switching or cause the temporal change amount dS of the feedback control amount Si to be smaller than the temporal change amount prior to the switching. In this manner, the switching from the first state to the second state includes an operation that accompanies a reduction in the magnitude of the driving force Fd and an increase in the magnitude of the frictional braking force Fbf.

The replacement control does not necessarily need to be continued until the regenerative braking force Fbr at the start of the replacement control is entirely replaced by the frictional braking force Fbf. In other words, the replacement control may be modified as long as it replaces at least part of the regenerative braking force Fbr at the start of the replacement control with the frictional braking force Fbf.

During the execution of the replacement control, the request braking force Fbq does not necessarily need to be constant.

The request value Rc of the driver assistance device 60 may be modified as long as it is a value that correlates with the longitudinal force. For example, the request value Rc of the driver assistance device 60 may be an acceleration. In this case, the travel controller 100 does not need to calculate the target acceleration Gt and thus does not need to include the target acceleration calculating unit 101. Also, the travel controller 100 does not need to convert the dimension of the feedback control amount Si and thus does not need to include the converting unit 105.

The dead band setting unit 111 may set a dead band when the frictional braking intervention flag FLG is ON, and does not necessarily need to set a dead band when the frictional braking intervention flag FLG is OFF.

The dead band setting unit 111 does not necessarily need to change the width Wh of the dead band from the first width Wh1 to the second width Wh2 in a stepwise manner when the frictional braking intervention flag FLG is set to ON from OFF. For example, the dead band setting unit 111 may gradually change the width Wh of the dead band from the first width Wh1 to the second width Wh2. The same applies to a case in which the frictional braking intervention flag FLG is set to OFF from ON.

In a case in which the deviation hG increases, the dead band setting unit 111 may change the width Wh of the dead band back to the first width Wh1 even after setting the width Wh of the dead band to the second width Wh2. The case in which the magnitude of the deviation hG increases refers to a case in which the deviation hG is greater than a specific value or a case in which the deviation hG remains outside the first width Wh1 but within the second width Wh2 for a specific period of time. When the width Wh of the dead band is changed back to the first width Wh1, the integral term is preferably reset.

The change amount limiting unit 113 may set a limit to the temporal change amount dS of the feedback control amount Si when frictional braking intervention flag FLG is ON, and does not necessarily need to set a limit to the temporal change amount dS of the feedback control amount Si when the frictional braking intervention flag FLG is OFF.

The change amount limiting unit 113 does not necessarily need to change the upper limit of the temporal change amount dS of the feedback control amount Si from the first upper limit dS1 to the second upper limit dS2 in a stepwise manner when the frictional braking intervention flag FLG is set to ON from OFF. For example, the change amount limiting unit 113 may gradually change the upper limit of the temporal change amount dS from the first upper limit dS1 to the second upper limit dS2. The same applies to a case in which the frictional braking intervention flag FLG is set to OFF from ON.

In a case in which the deviation hG increases, the change amount limiting unit 113 may change the upper limit of the temporal change amount dS of the feedback control amount Si back to the first upper limit dS1 even after setting the upper limit of the temporal change amount dS of the feedback control amount Si to the second upper limit dS2. When the upper limit of the temporal change amount dS of the feedback control amount Si is changed back to the first upper limit dS1, the integral term is preferably reset.

In some cases, when the target acceleration Gt has a negative value and its absolute value is large, the frictional braking force Fbf as well as the regenerative braking force Fbr is applied to the vehicle 10. In other words, both of the driving device 40 and the braking device 50 operate in some cases. In this case, the state prior to the start of the replacement control is regarded as the second state. Thus, the dead band setting unit 111 preferably sets the width Wh of the dead band to the second width Wh2, and the change amount limiting unit 113 preferably sets the upper limit of the temporal change amount dS of the feedback control amount Si to the second upper limit dS2. Therefore, the feedback controlling unit 104 does not need to change the width Wh of the dead band or the temporal change amount dS of the feedback control amount Si even if the replacement control is started.

In place of the brake controlling unit 52, the longitudinal force controlling unit 106 may divide the request braking force Fbq into the regenerative braking force Fbr and the frictional braking force Fbf. In this case, the longitudinal force controlling unit 106 requests the driving device 40 to generate the request regenerative braking force Fbrq, and requests the braking device 50 to generate the request frictional braking force Fbfq.

The travel controller 100 may include at least one of the dead band setting unit 111 and the change amount limiting unit 113.

In the above-described embodiment, the request value Rc, which is a feedforward term, and the compensation value Rh, which is a feedback term, are used to set the request braking force Fbq and the request driving force Fdq. However, the present invention is not limited to this. If the compensation value Rh is used to set the request braking force Fbq and the request driving force Fdq, only the compensation value Rh of the request value Rc and the compensation value Rh may be used to set the request braking force Fbq and the request driving force Fdq.

The braking mechanism 30 may generate the frictional braking force Fbf by pressing the frictional members 32 against the wheel 20 as in a case of a drum brake.

The number of the wheels 20 of the vehicle 10 may be changed. For example, the vehicle 10 may be a two-wheel vehicle or a four-wheel vehicle.

The travel controller 100 is not limited to processing circuitry that includes a CPU and a ROM and executes software processing. For example, the travel controller 100 may include a dedicated hardware circuit that executes at least part of the processes executed in the above-described embodiment. The dedicated hardware circuits include, for example, an application specific integrated circuit (ASIC). That is, the travel controller 100 may be modified as long as it has any one of the following configurations (a) to (c).
(a) Processing circuitry including a processor that executes all of the above-described processes according to programs and a program storage device such as a ROM that stores the programs.
(b) Processing circuitry including a processor and a program storage device that execute part of the above-described processes according to the programs and a dedicated hardware circuit that executes the remaining processes.
(c) Processing circuitry including a dedicated hardware circuit that executes all of the above-described processes.

Multiple software processing devices each including a processor and a program storage device and multiple dedicated hardware circuits may be provided.

The examples are for the sake of description only, and not for purposes of limitation. The scope of the invention is not defined by the detailed description, but by the claims.

## Claims

1. A vehicle controller (100) that controls a driving device (40), which includes a motor-generator (41), and a braking device (50), which applies a frictional braking force to a vehicle (10), thereby automatically controlling a traveling speed of the vehicle (10), wherein
the vehicle controller comprises a controlling unit (104),
the controlling unit (104)
calculates a feedback control amount based on a deviation between a target acceleration (Gt) of the vehicle (10) and an actual acceleration (Ga) of the vehicle (10), and
executes a feedback control of the driving device (40) and the braking device (50) by using the feedback control amount, such that the deviation decreases,
a state in which only the driving device (40), of the driving device (40) and the braking device (50), operates is a first state,
a state in which at least the braking device (50), of the driving device (40) and the braking device (50), operates is a second state, and
is **characterized in that**
when switched from the first state to the second state, the controlling unit (104) calculates the feedback control amount such that the deviation permitted in the feedback control is greater than the deviation prior to a start of switching from the first state to the second state.

2. The vehicle controller (100) according to claim 1, wherein
when the deviation is in a dead band that is set to a range including 0, the controlling unit (104) sets the deviation to 0 when calculating the feedback control amount, and
when switched from the first state to the second state, the controlling unit (104) causes a width of the dead band to be wider than the width prior to the start of the switching.

3. The vehicle controller (100) according to claim 1 or 2, wherein, when switched from the first state to the second state, the controlling unit (104) causes a temporal change amount, which is a change amount per unit time of the feedback control amount, to be smaller than the temporal change amount prior to the start of the switching.

4. The vehicle controller (100) according to any one of claims 1 to 3, wherein
the driving device (40) is configured to apply a regenerative braking force to the vehicle (10),
the first state is a state in which the driving device (40) applies the regenerative braking force to the vehicle (10), and
the second state includes a state in which a magnitude of the frictional braking force is increased while a magnitude of the regenerative braking force is reduced.

5. A vehicle control method that controls a driving device (40), which includes a motor-generator (41), and a braking device (50), which applies a frictional braking force to a vehicle (10), thereby automatically controlling a traveling speed of the vehicle (10), the method comprising:
calculating a feedback control amount based on a deviation between a target acceleration (Gt) of the vehicle (10) and an actual acceleration (Ga) of the vehicle (10); and
executing a feedback control of the driving device (40) and the braking device (50) by using the feedback control amount, such that the deviation decreases, wherein
a state in which only the driving device (40), of the driving device (40) and the braking device (50), operates is a first state,
a state in which at least the braking device (50), of the driving device (40) and the braking device (50), operates is a second state, and
**characterized in that**
the calculating of the feedback control amount includes calculating, when switched from the first state to the second state, the feedback control amount such that the deviation permitted in the feedback control is greater than the deviation prior to a start of switching from the first state to the second state.

## Patentansprüche

1. Fahrzeugsteuerung (100), die eine Antriebsvorrichtung (40), die einen Motor-Generator (41) hat, und eine Bremsvorrichtung (50), die eine Reibungsbremskraft auf ein Fahrzeug (10) ausübt, steuert, wodurch eine Fahrgeschwindigkeit des Fahrzeugs (10) automatisch gesteuert wird, wobei die Fahrzeugsteuerung eine Steuereinheit (104) hat, wobei
die Steuereinheit (104)
eine Rückkopplungsregelungsgröße auf der Grundlage einer Abweichung zwischen einer Sollbeschleunigung (Gt) des Fahrzeugs (10) und einer vorliegenden Beschleunigung (Ga) des Fahrzeugs (10) berechnet, und
eine Rückkopplungsregelung der Antriebsvorrichtung (40) und der Bremsvorrichtung (50) unter Verwendung der Rückkopplungsregelungsgröße so ausführt, dass die Abweichung abnimmt,
ein Zustand, in dem aus der Antriebsvorrichtung (40) und der Bremsvorrichtung (50) nur die Antriebsvorrichtung (40) betätigt wird, ein erster Zustand ist,
ein Zustand, in dem aus der Antriebsvorrichtung (40) und der Bremsvorrichtung (50) mindestens die Bremsvorrichtung (50) betätigt wird, ein zweiter Zustand ist, und
**dadurch gekennzeichnet ist, dass**
beim Umschalten vom ersten Zustand in den zweiten Zustand die Steuereinheit (104) die Rückführungsregelungsgröße so berechnet, dass die in der Rückführungsregelung zulässige Abweichung größer ist als die Abweichung vor Beginn des Umschaltens vom ersten Zustand in den zweiten Zustand.

2. Fahrzeugsteuerung (100) gemäß Anspruch 1, wobei
wenn die Abweichung in einem Totbereich liegt, der auf einen Bereich mit 0 eingestellt ist, die Steuereinheit (104) bei der Berechnung der Rückführungsregelungsgröße die Abweichung auf 0 setzt, und
wenn aus dem ersten Zustand in den zweiten Zustand umgeschaltet wird, die Steuereinheit (104) bewirkt, dass eine Breite des Totbereichs größer ist als die Breite vor dem Beginn des Umschaltens.

3. Fahrzeugsteuerung (100) nach Anspruch 1 oder 2, wobei, wenn von dem ersten Zustand in den zweiten Zustand umgeschaltet wird, die Steuereinheit (104) bewirkt, dass eine zeitliche Änderungsgröße, die eine Änderungsgröße pro Zeiteinheit der Rückkopplungssteuerungsgröße ist, kleiner ist als die zeitliche Änderungsgröße vor dem Beginn des Umschaltens.

4. Fahrzeugsteuerung (100) nach einem der Ansprüche 1 bis 3, wobei
die Antriebsvorrichtung (40) konfiguriert ist, eine regenerative Bremskraft auf das Fahrzeug (10) auszuüben,
der erste Zustand ein Zustand ist, in dem die Antriebsvorrichtung (40) die regenerative Bremskraft auf das Fahrzeug (10) ausübt, und
der zweite Zustand einen Zustand hat, in dem eine Größe der Reibungsbremskraft erhöht wird, während eine Größe der regenerativen Bremskraft verringert wird.

5. Fahrzeugsteuerungsverfahren, das eine Antriebsvorrichtung (40), die einen Motor-Generator (41) hat, und eine Bremsvorrichtung (50), die eine Reibungsbremskraft auf ein Fahrzeug (10) ausübt, steuert, wodurch eine Fahrgeschwindigkeit des Fahrzeugs (10) automatisch gesteuert wird, wobei das Verfahren umfasst:
Berechnen einer Rückkopplungsregelungsgröße auf der Grundlage einer Abweichung zwischen einer Sollbeschleunigung (Gt) des Fahrzeugs (10) und einer vorliegenden Beschleunigung (Ga) des Fahrzeugs (10); und
Ausführen einer Rückkopplungsregelung der Antriebsvorrichtung (40) und der Bremsvorrichtung (50) unter Verwendung der Rückkopplungsregelungsgröße, so dass die Abweichung abnimmt, wobei
ein Zustand, in dem nur die Antriebsvorrichtung (40) der Antriebsvorrichtung (40) und der Bremsvorrichtung (50) betätigt wird, ein erster Zustand ist,
ein Zustand, in dem zumindest die Bremsvorrichtung (50) der Antriebsvorrichtung (40) und der Bremsvorrichtung (50) betätigt wird, ein zweiter Zustand ist, und
**dadurch gekennzeichnet, dass**
das Berechnen der Rückkopplungsregelungsgröße das Berechnen beim Umschalten vom ersten Zustand in den zweiten Zustand der Rückkopplungsregelungsgröße derart umfasst, dass die in der Rückkopplungsregelung zulässige Abweichung größer ist als die Abweichung vor einem Beginn des Umschaltens vom ersten Zustand in den zweiten Zustand.

## Revendications

1. Dispositif de commande de véhicule (100) qui commande un dispositif de conduite (40), qui comprend un moteur-générateur (41), et un dispositif de freinage (50), qui applique une force de freinage par friction à un véhicule (10), commandant ainsi automatiquement une vitesse de déplacement du véhicule (10), dans lequel
le dispositif de commande de véhicule comprend une unité de commande (104),
l'unité de commande (104)
calcule une quantité de commande de rétroaction sur la base d'un écart entre une accélération cible (Gt) du véhicule (10) et une accélération réelle (Ga) du véhicule (10), et
exécute une commande de rétroaction du dispositif de conduite (40) et du dispositif de freinage (50) en utilisant la quantité de commande de rétroaction, de manière à ce que l'écart diminue,
un état dans lequel, parmi le dispositif de conduite (40) et le dispositif de freinage (50), seul le dispositif de conduite (40) fonctionne est un premier état,
un état dans lequel, parmi le dispositif de conduite (40) et le dispositif de freinage (50), au moins le dispositif de freinage (50) fonctionne est un second état, et
est **caractérisée en ce que**
lors du passage du premier état au second état, l'unité de commande (104) calcule la quantité de commande de rétroaction de sorte que l'écart autorisé dans la commande de rétroaction soit supérieur à l'écart avant le début du passage du premier état au second état.

2. Dispositif de commande de véhicule (100) selon la revendication 1, dans lequel
lorsque l'écart est dans une zone morte réglée sur une plage comprenant 0, l'unité de commande (104) règle l'écart sur 0 lors du calcul de la quantité de commande de rétraction, et
lors du passage du premier état au second état, l'unité de commande (104) fait en sorte qu'une largeur de la bande morte soit supérieure à la largeur avant le début du passage.

3. Dispositif de commande de véhicule (100) selon la revendication 1 ou 2, dans lequel, lors du passage du premier état au second état, l'unité de commande (104) fait en sorte qu'une quantité de changement temporel, qui est une quantité de changement par unité de temps de la quantité de commande de rétroaction, soit plus petite que la quantité de changement temporel avant le début du passage.

4. Dispositif de commande de véhicule (100) selon l'une des revendications 1 à 3, dans lequel
le dispositif de conduite (40) est configuré pour appliquer une force de freinage par récupération au véhicule (10),
le premier état est un état dans lequel le dispositif de conduite (40) applique la force de freinage par récupération au véhicule (10), et
le second état comprend un état dans lequel une ampleur de la force de freinage par friction est augmentée tandis qu'une ampleur de la force de freinage par récupération est réduite.

5. Procédé de commande de véhicule qui commande un dispositif de conduite (40), qui comprend un moteur-générateur (41), et un dispositif de freinage (50), qui applique une force de freinage par friction à un véhicule (10), commandant ainsi automatiquement une vitesse de déplacement du véhicule (10), le procédé comprenant :
calculer une quantité de commande de rétroaction sur la base d'un écart entre une accélération cible (Gt) du véhicule (10) et une accélération réelle (Ga) du véhicule (10) ; et
exécuter une commande de rétroaction du dispositif de conduite (40) et du dispositif de freinage (50) en utilisant la quantité de commande de rétroaction, de manière à ce que l'écart diminue, dans lequel
un état dans lequel, parmi le dispositif de conduite (40) et le dispositif de freinage (50), seul le dispositif de conduite (40) fonctionne est un premier état,
un état dans lequel, parmi le dispositif de conduite (40) et le dispositif de freinage (50), au moins le dispositif de freinage (50) fonctionne est un second état, et
**caractérisé en ce que**
le calcul de la quantité de commande de rétroaction comprend le calcul, lors du passage du premier état au second état, de la quantité de commande de rétroaction de sorte que l'écart autorisé dans la commande de rétroaction soit supérieur à l'écart avant le début du passage du premier état au second état.
